# EUROPEAN PATENT APPLICATION

(11) **EP 4 622 316 A1**
(43) Date of publication of application: **24.09.2025**
(21) Application number: 25158214.4
(22) Date of filing: 17.02.2025
(51) Int. Cl.: H04W 12/30, H04W 12/42, H04W 12/47, H04W 8/18

(54) **DEVICES AND METHODS FOR EMBEDDED SUBSCRIBER IDENTITY MODULE PROVISIONING**

(30) Priority: 22.03.2024 CN 202410340583
(71) Applicant: Hand Held Products, Inc., Charlotte, NC 28202 (US)
(72) Inventor: YANG, Shanning, Charlotte, 28202 (US); TANG, Shangfei, Charlotte, 28202 (US); XU, Junmin, Charlotte, 28202 (US); DONG, Fangjie, Charlotte, 28202 (US); MA, Ruhua, Charlotte, 28202 (US); ZHANG, Hua, Charlotte, 28202 (US)
(74) Representative: Haseltine Lake Kempner LLP

(57) **Abstract**

In accordance with various embodiments of the present disclosure, a device for embedded subscriber identity module (eSIM) provisioning is provided. In some embodiments, the device comprises at least one processing element. Upon the device powering up, the at least one processing element determines if an ESIM-PROVISION near-field communication (NFC) emulated card exists on the device. If the at least one processing element determines that the ESIM-PROVISION NFC emulated card does not exist on the device, the at least one processing element (i) determines a first unique identifier corresponding to the device and a second unique identifier corresponding to an eSIM of the device and (ii) creates and stores the ESIM-PROVISION NFC emulated card containing the first unique identifier, the second unique identifier, and an empty eSIM activation code field.

## Description

### FIELD OF THE INVENTION

Example embodiments of the present disclosure relate generally to mobile devices and, more particularly, to devices and methods for embedded subscriber identity module provisioning.

### BACKGROUND

An embedded subscriber identity module (eSIM) is a digital version of the physical subscriber identity module (SIM) card which identifies a mobile device to enable network connection. eSIM provisioning is the process of remotely activating an eSIM in a device, allowing the device to connect to a mobile network or service provider without needing a physical SIM card.

eSIM provisioning typically involves downloading and installing an eSIM profile onto the device. Usually, this is done by running a Local Profile Assistant (LPA) application on the device, checking the device's International Mobile Equipment Identity (IMEI) number and Embedded Universal Integrated Circuit Card (eUICC) Identity (EID) number, scanning a QR code with the device, connecting the device to the mobile carrier's server, and downloading a profile onto the eSIM. However, for customers that deploy hundreds or thousands of devices with eSIMs, it is cumbersome and time-consuming to perform eSIM provisioning manually.

Such manual eSIM provisioning is plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to systems, devices, methods, computer-implemented methods, and computer program products for embedded subscriber identity module provisioning.

In accordance with various embodiments of the present disclosure, a device is provided. In some embodiments, the device comprises at least one processing element. Upon the device powering up, the at least one processing element determines if an ESIM-PROVISION near-field communication (NFC) emulated card exists on the device. If the at least one processing element determines that the ESIM-PROVISION NFC emulated card does not exist on the device, the at least one processing element (i) determines a first unique identifier corresponding to the device and a second unique identifier corresponding to an embedded subscriber identity module (eSIM) of the device and (ii) creates and stores the ESIM-PROVISION NFC emulated card containing the first unique identifier, the second unique identifier, and an empty eSIM activation code field.

In some embodiments, the first unique identifier comprises an International Mobile Equipment Identity number and the second unique identifier comprises an eUICC Identity number.

In some embodiments, in response to an NFC read command from an external device having a verified encryption key, the at least one processing element allows the external device to read the first unique identifier and the second unique identifier from the ESIM-PROVISION NFC emulated card.

In some embodiments, the at least one processing element sets the ESIM-PROVISION NFC emulated card to be on when the device is powered off.

In some embodiments, the at least one processing element allows the external device to read the first unique identifier and the second unique identifier from the ESIM-PROVISION NFC emulated card when the device is powered off.

In some embodiments, a local profile assistant executing on the at least one processing element sets the ESIM-PROVISION NFC emulated card to be on when the device is powered off.

In some embodiments, the at least one processing element writes an eSIM provisioning activation code in the eSIM activation code field of the ESIM-PROVISION NFC emulated card in response to receiving an NFC write command containing the eSIM provisioning activation code from the external device.

In some embodiments, the at least one processing element uses the eSIM provisioning activation code to download and store an eSIM provisioning activation profile.

In some embodiments, the at least one processing element does not allow an external device to read the ESIM-PROVISION NFC emulated card without a verified encryption key.

In some embodiments, the device comprises a first device and the external device comprises a second device.

In accordance with various embodiments of the present disclosure, a method is provided. In some embodiments, the method comprises upon a device powering up, determining if an ESIM-PROVISION near-field communication (NFC) emulated card exists on the device, and if it is determined that the ESIM-PROVISION NFC emulated card does not exist on the device, (i) determining a first unique identifier corresponding to the device and a second unique identifier corresponding to an embedded subscriber identity module (eSIM) of the device and (ii) creating and storing the ESIM-PROVISION NFC emulated card containing the first unique identifier, the second unique identifier, and an empty eSIM activation code field.

In accordance with various embodiments of the present disclosure, a computer program product is provided. In some embodiments, the computer program product comprises at least one non-transitory computer-readable storage medium having computer-readable program code portions stored therein. In some embodiments, the computer-readable program code portions comprise an executable portion configured to, upon a device powering up, determine if an ESIM-PROVISION near-field communication (NFC) emulated card exists on the device, and if it is determined that the ESIM-PROVISION NFC emulated card does not exist on the device, (i) determine a first unique identifier corresponding to the device and a second unique identifier corresponding to an embedded subscriber identity module (eSIM) of the device and (ii) create and store the ESIM-PROVISION NFC emulated card containing the first unique identifier, the second unique identifier, and an empty eSIM activation code field.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates a block diagram of an example system for eSIM provisioning, in accordance with an example embodiment of the present disclosure; and
FIGS. 2 and 3 are example flow diagrams illustrating an example method for eSIM provisioning, in accordance with an example embodiment of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

Various embodiments of the present disclosure provide improved devices and methods for eSIM provisioning. Such improved devices and methods for eSIM provisioning may be particularly helpful for users who have to perform eSIM provisioning on hundreds or even thousands of devices and may provide faster and more efficient provisioning.

Various embodiments of the present disclosure may be used with any suitable device that has an eSIM, including mobile devices such as mobile phones, tablets, etc. Further, various embodiments of the invention may be used with any suitable Internet-of- Things (IoT) device that has an eSIM. IoT devices are hardware devices, such as sensors, appliances, and other machines that collect and exchange data over the Internet. For simplicity, any such device that has an eSIM that can be provisioned using various embodiments of the present disclosure will be referred to herein as a mobile device or simply a device.

Various embodiments of the present disclosure enable eSIM provisioning using the near-field communication (NFC) capability of the device to be provisioned and the NFC capability of a device that performs at least part of the provisioning process (the device that performs at least part of the provisioning process is referred to herein as an external device, as such a device is external to the device to be provisioned).

Various embodiments of the present disclosure use NFC to perform at least a portion of the eSIM provisioning process, specifically, providing the required eSIM activation code to the device to be provisioned. An eSIM activation code is required for a mobile device to receive an eSIM profile from a mobile carrier to complete the eSIM provisioning process.

In various embodiments of the present disclosure, the device to be provisioned is manufactured with the functionality to communicate via NFC with the external device and to receive the eSIM activation code from the external device.

In various embodiments of the present disclosure, when the device to be provisioned is powered on, the device determines if a predetermined NFC emulated card exists on the device. In various embodiments of the present disclosure, if the predetermined NFC emulated card does not exist on the device, the device creates the NFC emulated card containing the device's International Mobile Equipment Identity (IMEI) number and its eUICC Identity (EID) number, along with an empty eSIM activation code field. In various embodiments of the present disclosure, the device only allows an external device with a verified encryption key to read the IMEI and EID from the NFC emulated card.

In some embodiments of the present disclosure, the NFC emulated card is set to be "on" when the device is powered off. As such, the external device is able to read the NFC emulated card and write the eSIM activation code to the NFC emulated card even when the device to be provisioned is powered off. This enable at least part of the provisioning process to be performed when the device is powered off, thereby saving time and increasing efficiency of the eSIM provisioning process.

In various embodiments of the present disclosure, the external device obtains a list, table, or the like from a mobile communication carrier of many eSIM activation codes, each corresponding to an individual device's IMEI and EID. In various embodiments of the present disclosure, the external device reads the IMEI and EID from the NFC emulated card of the device to be provisioned and uses the device's IMEI and EID to determine the appropriate eSIM activation code to be used to provision the device. In various embodiments of the present disclosure, the external device writes the eSIM activation code to the NFC emulated card. Once the eSIM activation code is written to the NFC emulated card, the process of provisioning the device can be completed, such as by powering on the device and connecting the device to a Subscription Manager Data Preparation + (SM-DP+) server to obtain the necessary eSIM profile.

In various embodiments of the present disclosure, the device to be provisioned and the external device can be the same type of device, and even the same stock keeping unit (SKU).

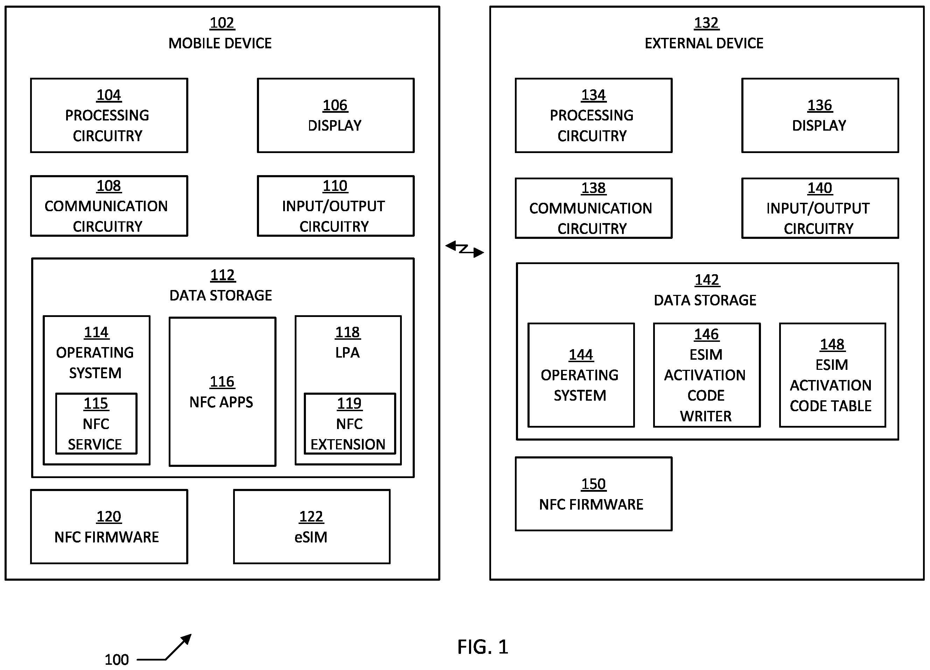

Referring now to the figures, FIG. 1 is an example block diagram of an example system 100 for eSIM provisioning is illustrated in accordance with an example embodiment of the present disclosure. As seen in FIG. 1, a mobile device 102 (or any other suitable device to be provisioned) comprises processing circuitry 104, a display 106, communication circuitry 108, input/output circuitry 110, data storage 112, NFC firmware 120, and an eSIM 122. The data storage 112 stores an operating system (OS) 114, NFC applications (or apps) 116, and a Local Profile Assistant (LPA) 118. In the illustrated embodiment, the OS 114 includes an NFC service component 115 and the LPA 118 includes an NFC extension 119. As further seen in FIG. 1, an external device 132 to perform processes for provisioning the eSIM 122 of the mobile device 102 comprises processing circuitry 134, a display 136, communication circuitry 138, input/output circuitry 140, data storage 142, and NFC firmware 150. The data storage 142 stores an operating system (OS) 144, an eSIM activation code writer 146, and an eSIM activation code table 148. In various embodiments of the present disclosure, any one or more of the components illustrated in the mobile device 102 and/or the external device 132 of FIG. 1 may be omitted.

While FIG. 1 illustrates the mobile device 102 and the external device 132 having (at least some) different components, in alternative embodiments of the invention the mobile device and the external device can have identical components. That is, the mobile device has the components and functionality to provision others of the same type of mobile device. For example, a single type of device may be provided that has all of the components of the mobile device 102 plus any different components of the external device 132 (e.g., the eSIM activation code writer 146 and the eSIM activation code table 148), thereby enabling a user to use the same type of device to provision the eSIM of the other devices.

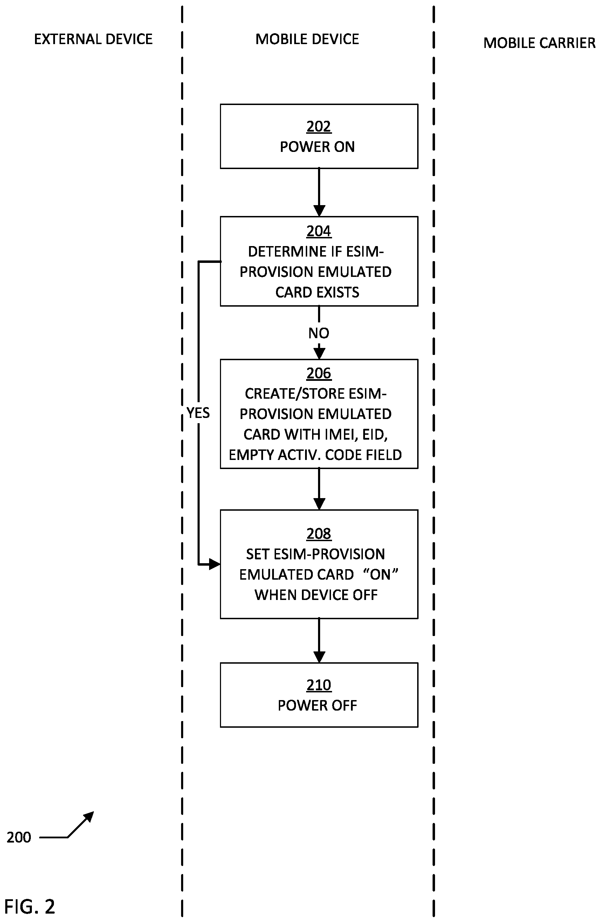

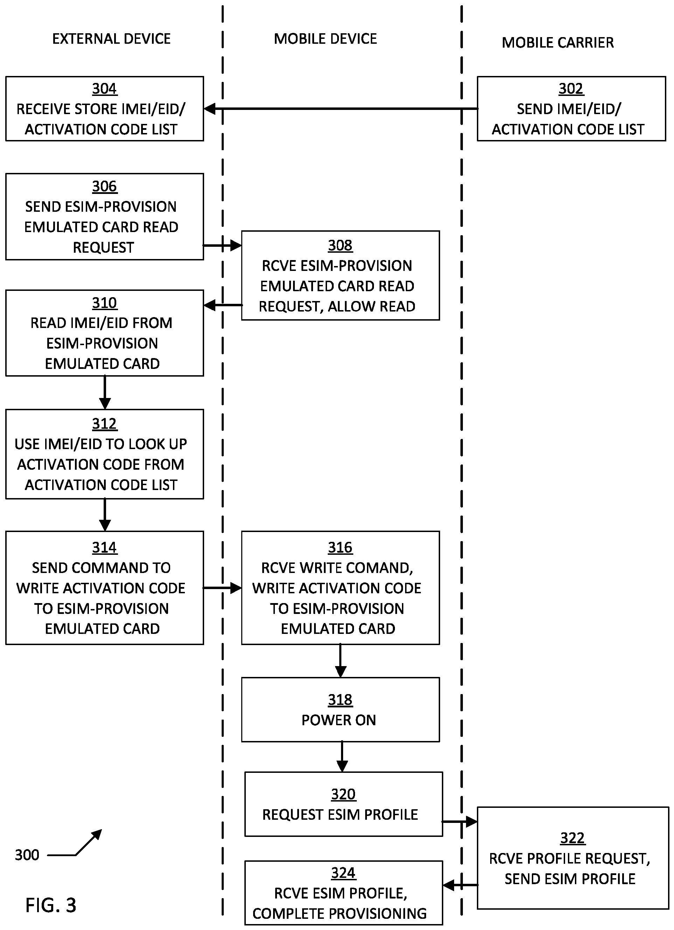

In the illustrated embodiment of FIG. 1, the processing circuitry 104, the display 106, the communication circuitry 108, the input/output circuitry 110, the data storage 112, the NFC firmware, and the eSIM 122 may be the same or similar to the corresponding components of a conventional mobile device or IoT device. For example, in various embodiments the processing circuitry 104 executes instructions stored in the data storage 112 (such as the OS 114, the NFC apps 116 (which may include, for example, mobile payments apps), and the LPA 118), the display 106 displays information for a user, the communication circuitry 108 enables communications with other devices and/or a communications network, the input/output circuitry 110 enables the device to receive inputs from a user and provide outputs to a user, the data storage 112 stores various software components executed by the processing circuitry 104, the NFC firmware 120 provides secure storage of software components for providing NFC functionality, and the eSIM 122 securely stores an international mobile subscriber identity (IMSI) number and its related key, which are used to identify and authenticate subscribers on mobile telephone devices. Similarly, in various embodiments the processing circuitry 134 executes instructions stored in the data storage 142 (such as the OS 144 and the eSIM activation code writer (described further below)), the display 136 displays information for a user, the communication circuitry 138 enables communications with other devices and/or a communications network, the input/output circuitry 140 enables the device to receive inputs from a user and provide outputs to a user, the data storage 142 stores various software components executed by the processing circuitry 104 and various data, and the NFC firmware 150 provides secure storage of software components for providing NFC functionality. The NFC service 115 and the NFC extension 119 of the mobile device 102 and the eSIM activation code writer 146 and the eSIM activation code table 148 of the external device 132 are described further below in relation to FIGS. 2 and 3.

The processing circuitry 104, 134 may be embodied in a number of different ways and may, for example, include one or more processing devices configured to perform independently. Additionally, or alternatively, the processing circuitry 104, 134 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

For example, the processing circuitry 104, 134 may be embodied as one or more complex programmable logic devices (CPLDs), microprocessors, multi-core processors, co-processing entities, application-specific instruction-set processors (ASIPs), and/or controllers. Further, the processing circuitry 104, 134 may be embodied as one or more other processing devices or circuitry. The term circuitry may refer to an entirely hardware embodiment or a combination of hardware and computer program products. Thus, the processing circuitry 104, 134 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processing circuitry 104, 134 may be configured for a particular use or configured to execute instructions stored in volatile or non-volatile media or otherwise accessible to the processing circuitry 104, 134. As such, whether configured by hardware or computer program products, or by a combination thereof, the processing circuitry 104, 134 may be capable of performing steps or operations according to embodiments of the present disclosure when configured accordingly.

In an example embodiment, the processing circuitry 104, 134 may be configured to execute instructions stored in the data storage 112, 142 or otherwise accessible to the processor. Alternatively, or additionally, the processing circuitry 104, 134 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processing circuitry 104, 134 is embodied as an executor of software instructions, the instructions may specifically configure the processor to perform the algorithms and/or operations described herein when the instructions are executed.

In some embodiments, the data storage 112, 142 may be non-transitory and may include, for example, one or more volatile and/or non-volatile memories. In other words, for example, the data storage 112, 142 may be an electronic storage device (e.g., a computer readable storage medium). The data storage 112, 142 may be configured to store information, data, content, applications, instructions, or the like, for enabling the mobile device 102 and/or the external device 132 to carry out various functions in accordance with example embodiments of the present disclosure. In this regard, the data storage 112, 142 may be preconfigured to include computer-coded instructions (e.g., computer program code), and/or dynamically be configured to store such computer-coded instructions for execution by the processing circuitry 104, 134.

In an example embodiment, the communication circuitry 108, 138 may be any means such as a device or circuitry embodied in either hardware or a combination of hardware and software that is configured to receive and/or transmit data from/to a network and/or any other device, circuitry, or module in communication with the mobile device 102 and/or the external device 132. In this regard, the communication circuitry 108, 138 may include, for example, a network interface for enabling communications with a wired or wireless communication network. For example, the communication circuitry 108, 138 may include one or more circuitries, network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

In some embodiments, the mobile device 102 and/or the external device 132 may include a display (such as display 106 or display 136) that may, in turn, be in communication with the processing circuitry to display information to a user. In various examples of the present disclosure, the display 106, 136 may include a liquid crystal display (LCD), a light-emitting diode (LED) display, a plasma display panel (PDP), a quantum dot LED (QLED) display, and/or the like.

In some embodiments, the mobile device 102 and/or the external device 132 may include input/output circuitry (such as input/output circuitry 110 or input/output circuitry 140) that may, in turn, be in communication with the processing circuitry to provide output to the user and, in some embodiments, to receive an indication of a user input. The input/output circuitry 110, 140 may comprise an interface, a mobile application, a kiosk, or the like. In some embodiments, the input/output circuitry 110, 140 may also include a keyboard, a mouse, a joystick, a touch screen, touch areas, soft keys, a microphone, a speaker, or other input/output mechanisms. The processing circuitry may be configured to control one or more functions of one or more user interface elements through computer program instructions (e.g., software and/or firmware) stored on a memory accessible to the processor (e.g., the data storage 112, 142, and/or the like).

The mobile device 102 and/or the external device 132 may be configured to execute the operations described herein. Although the components are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries.

The use of the term "circuitry" as used herein with respect to components of the apparatus should therefore be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the mobile device 102 and/or the external device 132 may provide or supplement the functionality of particular circuitry.

Reference will now be made to FIG. 2 and FIG. 3, which provide flowcharts illustrating example steps, processes, procedures, and/or operations in accordance with various embodiments of the present disclosure. Various methods described herein, including, for example, example methods as shown in FIG. 2 and FIG. 3, may provide various technical benefits and improvements. It is noted that each block of the flowchart, and combinations of blocks in the flowchart, may be implemented by various means such as hardware, firmware, circuitry and/or other devices associated with execution of software including one or more computer program instructions. For example, one or more of the procedures described in FIG. 2 and FIG. 3 may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

The example methods of FIG. 2 and FIG. 3 illustrate process and data flow among three different entities/devices: a mobile device whose eSIM is to be provisioned, such as the mobile device 102 of FIG. 1; an external device, such as the external device 132 of FIG. 1, to perform at least some steps of a process of provisioning the eSIM of the mobile device; and a mobile carrier with which communication is to be established by provisioning the eSIM of the mobile device.

Referring now to FIG. 2, an example method 200 in accordance with some embodiments of the present disclosure is illustrated. In particular, the example method 200 illustrates example steps/operations of setting up a mobile device or the like for eSIM provisioning, in accordance with some embodiments of the present disclosure. In various embodiments of the present disclosure, example method 200 is performed at a manufacturer of the mobile device or the like, when the device is first powered up and does not have the predetermined NFC emulated card on the device, before the device is shipped from the manufacturer.

The example method 200 of FIG. 2 starts at step/operation 202. At step/operation 202, a mobile device for which the eSIM needs to be provisioned (such as, but not limited to, the mobile device 102 described above in connection with FIG. 1) is powered on.

At step/operation 204, a processor (such as, but not limited to, the processing circuitry 104 of the mobile device 102 described above in connection with FIG. 1) determines if an NFC emulated card to be used for eSIM provisioning exists. In some embodiments, such an NFC emulated card may be termed an "ESIM-PROVISION" NFC emulated card.

If it is determined at step/operation 204 that an ESIM-PROVISION NFC emulated card does not exist, the process proceeds to step/operation 206. At step/operation 206, a processor (such as, but not limited to, the processing circuitry 104 of the mobile device 102 described above in connection with FIG. 1) reads the device's IMEI number and EID number and creates an ESIM-PROVISION NFC emulated card containing the device's IMEI number, its EID number, and an empty eSIM activation code field. If it is determined at step/operation 204 that an ESIM-PROVISION NFC emulated card does exist, the process skips step/operation 206 and proceeds to step/operation 208.

At step/operation 208, a processor (such as, but not limited to, the processing circuitry 104 of the mobile device 102 described above in connection with FIG. 1) sets the ESIM-PROVISION NFC emulated card to be ON when the device is powered off. In this regard, the external device is able to read the ESIM-PROVISION NFC emulated card and write the eSIM activation code to the ESIM-PROVISION NFC emulated card even when the device to be provisioned is powered off.

At step/operation 210, the mobile device for which the eSIM needs to be provisioned (such as, but not limited to, the mobile device 102 described above in connection with FIG. 1) is powered off.

In the illustrated example embodiment, the NFC service 115 executed by the processing circuitry 104 of the mobile device 102 described above in connection with FIG. 1 performs steps/operations 204-208 of FIG. 2.

Referring now to FIG. 3, an example method 300 in accordance with some embodiments of the present disclosure is illustrated. In particular, the example method 300 illustrates example steps/operations of eSIM provisioning of a mobile device or the like, in accordance with some embodiments of the present disclosure. In various embodiments of the present disclosure, example method 300 is performed at the facility of a user who has a large number of mobile devices whose eSIM needs to be provisioned (with the exception of the steps/operations performed by the mobile carrier).

The example method 300 of FIG. 3 starts at step/operation 302. At step/operation 302, a mobile carrier sends a list (which may be, for example, in a data table format) of eSIM activation codes for some or all of a user's mobile devices. The eSIM activation codes each correspond to an IMEI and EID of a particular one of the user's devices. In various embodiments, the mobile carrier may send this list in response to a request from the user (not illustrated).

At step/operation 304, an external device (such as, but not limited to, the external device 132 described above in connection with FIG. 1) to be used to provision another device receives the list of eSIM activation codes and corresponding IMEI/EID numbers (which is referred to herein as the IMEI/EID/activation code list) from the mobile carrier and stores the list. In the illustrated embodiment, the IMEI/EID/activation code list is stored as the eSIM activation code table 148 in the data storage 142. In alternative embodiments of the present disclosure, the IMEI/EID/activation code list may be stored outside of the external device (e.g., in an external data server), and may be accessed by the external device as needed for eSIM provisioning. In various embodiments, steps/operations 302 and 304 are performed in advance of the eSIM provisioning process.

At step/operation 306, a processor in the external device (such as, but not limited to, the processing circuitry 134 of the external device 132 described above in connection with FIG. 1) sends an ESIM-PROVISION NFC emulated card read request to a mobile device for which the eSIM needs to be provisioned (such as, but not limited to, the mobile device 102 described above in connection with FIG. 1). In various embodiments, the ESIM-PROVISION NFC emulated card read request is sent using the NFC capability of the external device.

At step/operation 308, a processor in the mobile device (such as, but not limited to, the processing circuitry 104 of the mobile device 102 described above in connection with FIG. 1) receives the ESIM-PROVISION NFC emulated card read request from the external device and allows the ESIM-PROVISION NFC emulated card to be read. In various embodiments, the ESIM-PROVISION NFC emulated card read request is received using the NFC capability of the mobile device. As described above, in some embodiments the ESIM-PROVISION NFC emulated card is set to be "on" when the device is powered off, thereby enabling steps/operations 306-316 of FIG. 3 to be performed while the mobile device is powered off.

At step/operation 310, a processor in the external device (such as, but not limited to, the processing circuitry 134 of the external device 132 described above in connection with FIG. 1) reads the mobile device's IMEI and EID numbers from the ESIM-PROVISION NFC emulated card.

At step/operation 312, a processor in the external device (such as, but not limited to, the processing circuitry 134 of the external device 132 described above in connection with FIG. 1) uses the mobile device's IMEI and EID numbers that are read from the ESIM-PROVISION NFC emulated card to look up the mobile device's activation code in the IMEI/EID/activation code list.

At step/operation 314, a processor in the external device (such as, but not limited to, the processing circuitry 134 of the external device 132 described above in connection with FIG. 1) sends a write command to the mobile device to write the activation code to the empty eSIM activation code field of the ESIM-PROVISION NFC emulated card on the mobile device.

At step/operation 316, a processor in the mobile device (such as, but not limited to, the processing circuitry 104 of the mobile device 102 described above in connection with FIG. 1) receives the ESIM-PROVISION NFC emulated card write request from the external device and writes the activation code to the empty eSIM activation code field of the ESIM-PROVISION NFC emulated card.

With the activation code now written to the ESIM-PROVISION NFC emulated card, the mobile device is able to obtain an eSIM profile from the mobile carrier to complete the eSIM provisioning process. At step/operation 318, the mobile device for which the eSIM needs to be provisioned is powered on.

At step/operation 320, a processor in the mobile device (such as, but not limited to, the processing circuitry 104 of the mobile device 102 described above in connection with FIG. 1) uses the activation code to request an eSIM profile from the mobile carrier. In various embodiments, for the communication between the mobile device and the mobile carrier to occur, the mobile device must be powered on and connected to an appropriate communications network.

At step/operation 322, the mobile carrier receives the profile request from the mobile device, verifies the activation code, and sends the eSIM profile to the mobile device.

At step/operation 324, a processor in the mobile device (such as, but not limited to, the processing circuitry 104 of the mobile device 102 described above in connection with FIG. 1) receives the eSIM profile from the mobile carrier, stores the eSIM profile, and completes the eSIM provisioning process.

In the illustrated example embodiment, the eSIM activation code writer 146 executed by the processing circuitry 134 of the external device performs steps/operations 304, 306, and 310-314 of FIG. 3, the NFC service 115 executed by the processing circuitry 104 of the mobile device 102 described above in connection with FIG. 1 performs steps/operations 308 and 316, and the NFC extension 119 of the LPA 118 executed by the processing circuitry 104 of the mobile device 102 described above in connection with FIG. 1 performs steps/operations 320 and 324 of FIG. 3.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

**In** addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A device comprising:
at least one processing element;
wherein, upon the device powering up, the at least one processing element determines if an ESIM-PROVISION near-field communication (NFC) emulated card exists on the device; and
wherein, if the at least one processing element determines that the ESIM-PROVISION NFC emulated card does not exist on the device, the at least one processing element (i) determines a first unique identifier corresponding to the device and a second unique identifier corresponding to an embedded subscriber identity module (eSIM) of the device and (ii) creates and stores the ESIM-PROVISION NFC emulated card containing the first unique identifier, the second unique identifier, and an empty eSIM activation code field.

2. The device of claim 1, wherein the first unique identifier comprises an International Mobile Equipment Identity number and the second unique identifier comprises an Embedded Universal Integrated Circuit Card (eUICC) Identity Document number.

3. The device of claim 1, wherein, in response to an NFC read command from an external device having a verified encryption key, the at least one processing element allows the external device to read the first unique identifier and the second unique identifier from the ESIM-PROVISION NFC emulated card.

4. The device of claim 3, wherein the at least one processing element sets the ESIM-PROVISION NFC emulated card to be on when the device is powered off.

5. The device of claim 4, wherein the at least one processing element allows the external device to read the first unique identifier and the second unique identifier from the ESIM-PROVISION NFC emulated card when the device is powered off.

6. The device of claim 4, wherein a local profile assistant executing on the at least one processing element sets the ESIM-PROVISION NFC emulated card to be on when the device is powered off.

7. The device of claim 3, wherein the at least one processing element writes an eSIM provisioning activation code in the eSIM activation code field of the ESIM-PROVISION NFC emulated card in response to receiving an NFC write command containing the eSIM provisioning activation code from the external device; and
wherein the at least one processing element uses the eSIM provisioning activation code to download and store an eSIM provisioning activation profile.

8. The device of claim 3, wherein the at least one processing element does not allow an external device to read the ESIM-PROVISION NFC emulated card without a verified encryption key.

9. A method of provisioning an embedded subscriber identity module (eSIM) of a device, the method comprising:
upon the device powering up, determining if an ESIM-PROVISION near-field communication (NFC) emulated card exists on the device; and
if it is determined that the ESIM-PROVISION NFC emulated card does not exist on the device, (i) determining a first unique identifier corresponding to the device and a second unique identifier corresponding to the eSIM of the device and (ii) creating and storing the ESIM-PROVISION NFC emulated card containing the first unique identifier, the second unique identifier, and an empty eSIM activation code field.

10. The method of claim 9, wherein the first unique identifier comprises an International Mobile Equipment Identity number and the second unique identifier comprises an Embedded Universal Integrated Circuit Card (eUICC) Identity Document number.

11. The method of claim 9, further comprising:
in response to an NFC read command from an external device having a verified encryption key, allowing the external device to read the first unique identifier and the second unique identifier from the ESIM-PROVISION NFC emulated card; and
setting the ESIM-PROVISION NFC emulated card to be on when the device is powered off.

12. The method of claim 11, wherein allowing the external device to read the first unique identifier and the second unique identifier from the ESIM-PROVISION NFC emulated card comprises allowing the external device to read the first unique identifier and the second unique identifier from the ESIM-PROVISION NFC emulated card when the device is powered off.

13. The method of claim 11, wherein a local profile assistant executing on the at least one processing element sets the ESIM-PROVISION NFC emulated card to be on when the device is powered off.

14. The method of claim 11, further comprising:
receiving an NFC write command containing an eSIM provisioning activation code from the external device;
writing the eSIM provisioning activation code in the eSIM activation code field of the ESIM-PROVISION NFC emulated card; and
using the eSIM provisioning activation code, downloading and storing an eSIM provisioning activation profile on the device.

15. The method of claim 11, further comprising:
preventing an external device from reading the ESIM-PROVISION NFC emulated card without a verified encryption key.
